# EUROPÄISCHE PATENTSCHRIFT

(11) **EP 2 186 405 B1**
(45) Veröffentlichungstag und Bekanntmachung des Hinweises auf die Patenterteilung: **01.03.2017**
(21) Anmeldenummer: 08168967.1
(22) Anmeldetag: 12.11.2008
(51) Int. Cl.: A01M 7/00

(54) **Spritzgestänge und Verfahren zu dessen Steuerung**
Spray bar and method for controlling it
Tige de pulvérisation et son procédé de commande

(43) Veröffentlichungstag der Anmeldung: 19.05.2010
(73) Patentinhaber: HORSCH LEEB Application Systems GmbH, 94562 Oberpöring (DE)
(72) Erfinder: Leeb, Theodor, 94562 Oberpöring (DE)
(74) Vertreter: Benninger, Johannes

(56) Entgegenhaltungen:
- EP-A- 0 176 084
- EP-A- 1 481 586
- WO-A-2008/098290
- DE-A1- 4 140 254
- FR-A- 2 603 453
- GB-A- 2 088 181
- GB-A- 2 259 637
- US-A- 5 348 226

## Beschreibung

Die vorliegende Erfindung betrifft ein Spritzgestänge mit mindestens zwei über Gelenke an einem Mittelteil angeordnete Ausleger und an den Auslegern angeordneten Spritzdüsen zum Ausbringen von Flüssigkeiten, wobei jeder Ausleger in mindestens zwei Segmente unterteilt ist, die über eine horizontale Achse schwenkbar angeordnet und untereinander mittels Gelenken verbunden sind und eine Stellbewegung der einzelnen Segmente zueinander aktiv steuerbar ist. Die Erfindung betrifft weiterhin ein Verfahren zur Ansteuerung eines solchen Spritzgestänges.

Feldspritzen und an Arbeitsmaschinen wie Traktoren angehängte Spritzgestänge weisen teilweise sehr große Arbeitsbreiten von mehr als zwanzig Metern auf. Für Transportfahrten werden solch breite Spritzgestänge gefaltet und eingeklappt. Auf dem Acker befinden sich beidseitig der Arbeitsmaschine symmetrische Ausleger von mehreren Metern Länge, die je nach Oberflächenbeschaffenheit und Ackerrelief einen veränderlichen Abstand vom Boden haben. Da die an den Auslegern angeordneten und nach unten gerichteten Düsen zur Ausbringung des Spritzmittels jeweils einen definierten Spritzkegel aufweisen, ergibt sich aus einer veränderlichen Distanz der Düsen zum Boden eine ungleichmäßige Bedeckung des Ackers mit Spritzmittel. Aus diesem Grund besteht bei zunehmenden Auslegerdimensionen und der damit einhergehenden Arbeitsbreite die Notwendigkeit, das Spritzgestänge dem Bodenrelief nachzuführen, da bereits geringe Schrägstellungen des Spritzgestänges zu großen Abstandsdifferenzen der Düsen zum Boden führen.

Ein Spritzgestänge, welches über einen aus Segmenten zusammengesetzten Ausleger verfügt, ist aus dem Stand der Technik bereits bekannt. So wird in der DE 32 02 569 A1 eine Verteilermaschine offenbart, bei der einzelne Segmente miteinander verbunden sind und die Bewegung der einzelnen Segmente passiv erfolgt. Für diesen Mechanismus ist ein stützendes Element auf der Außenseite eines jeden Auslegers notwendig, um den Schwenkvorgang zu ermöglichen. Zur Vermeidung von Ertragseinbußen ist es jedoch wünschenswert, ein Anpassen der einzelnen Segmente hinsichtlich unterschiedlicher Bodenkonturen zu erreichen, ohne mit dem Boden in direktem Kontakt zu stehen.

Weiterhin wird in der DE 18 33 453 U ein Spritzgestänge offenbart, welches Düsenbäume umfasst, die an einem Ausleger mittels elastischer Elemente angeordnet sind. Durch die elastischen Elemente können sich die Düsenbäume auch nach einem Schwenkvorgang des Auslegers in einer vertikalen Position wiederfinden. Da der Ausleger gemäß diesem Dokument nur um eine Achse schwenkbar angeordnet ist, besitzt das Spritzgestänge lediglich eine eingeschränkte Flexibilität. Aufgrund der hohen Unregelmäßigkeit von in der Praxis auftretenden Bodenstrukturen sind Spritzgestänge mit einer größeren Flexibilität wünschenswert, um eine gleichmäßige Verteilung der Spritzflüssigkeit auf den Untergrund zu gewährleisten.

Durch FR 2 603 453 A ist ein Spritzgestänge mit mindestens zwei über Gelenke an einem Mittelteil angeordneten Auslegern und an den Auslegern angeordneten Spritzdüsen zum Ausbringen von Flüssigkeiten bekannt. Jeder Ausleger ist in mindestens zwei Segmente unterteilt, die über eine horizontale Achse schwenkbar angeordnet sind. Die Segmente sind untereinander mittels Gelenken verbunden. Eine Stellbewegung der einzelnen Segmente zueinander ist aktiv steuerbar.Den Segmenten sind Sensoren zur Erfassung und Weiterleitung eines Istwertes bezüglich der Relativposition der Segmente zugeordnet.

Durch DE 41 40 254 A1 ist bekannt, zwei an den distalen Enden eines Spritzgestänges angeordnete, den Abstand zur Feldoberfläche messende Ultraschallsensoren zu verwenden, um das Spritzgestänge in gleichmäßigem Abstand zur Feldoberfläche zu halten.

Durch EP 0 176 084 A ist ein Spritzgestänge mit mindestens zwei über Gelenke an einem Mittelteil angeordneten Auslegern und an den Auslegern angeordneten Spritzdüsen zum Ausbringen von Flüssigkeiten bekannt. Jeder Ausleger ist in mindestens zwei Segmente unterteilt, die über eine horizontale Achse schwenkbar angeordnet sind. Die Segmente sind untereinander mittels Gelenken verbunden. Eine Stellbewegung der einzelnen Segmente zueinander ist aktiv steuerbar. Dabei führt beim Verschwenken eines ersten Gestängeteils ein zweites Gestängeteil zwangsweise eine gegenläufige Faltbewegung aus.

Durch EP 1 481 586 A ist ein Spritzgestänge mit mindestens zwei über Gelenke an einem Mittelteil angeordneten Auslegern und an den Auslegern angeordneten Spritzdüsen zum Ausbringen von Flüssigkeiten bekannt. Jeder Ausleger ist in mindestens zwei Segmente unterteilt, die über eine horizontale Achse schwenkbar angeordnet sind. Die Segmente sind untereinander mittels Gelenken verbunden. Eine Stellbewegung der einzelnen Segmente zueinander ist aktiv steuerbar. Der Mittelteil ist entlang einer vertikalen Achse bewegbar angeordnet.

Als Aufgabe der Erfindung stellt sich, ein Spritzgestänge und ein Verfahren zu dessen Ansteuerung zur Verfügung zu stellen, mit deren Hilfe eine möglichst genaue Anpassung des Auslegers an unterschiedliche Bodenkonturen ermöglicht wird ohne dass der Ausleger mit dem Untergrund in direkten Kontakt kommen muss.

Diese Aufgabe wird durch eine Spritzeinrichtung, welche die Merkmale des Anspruchs 1 umfasst, und ein Verfahren, welches die Merkmale des Anspruchs 5 umfasst, gelöst. Infolge dieser Maßnahme erfolgt eine aktive Ansteuerung von einzelnen Segmenten des Spritzgestänges, so dass ein direkter Kontakt mit dem Boden vermieden wird. Zudem kann durch das erfindungsgemäße Verfahren eine genaue Anpassung in Echtzeit der einzelnen Segmente des Auslegers an unterschiedliche Bodenkonturen erreicht werden.

Vor allem hinsichtlich der Bewirtschaftung von ausgedehnten Flächen und Feldern ist ein Spritzgestänge der beanspruchten Art von großer Bedeutung, da nur durch einen gleichbleibenden Abstand von sich am Spritzgestänge befindlichen Spritzdüsen zum Boden eine weitgehend homogene Verteilung der Spritzflüssigkeit über den Untergrund erzielt werden kann.

Der Freiheitsgrad des erfindungsgemäßen Spritzgestänges wird zudem durch die Anordnung und Aufhängung der Ausleger mittels Gelenken an einem Mittelteil erhöht. Da in vielen Fällen die Ausleger zur Ausbringung einer Spritzflüssigkeit eine vordefinierte Länge umfassen müssen, die je nach Einsatzbereich der Spritzvorrichtung stark variieren kann, ist es nötig, sämtliche Gelenke anforderungsgerecht auszugestalten. So müssen diese dazu fähig sein, die durch die Hebelwirkung der Spritzarme auftretenden Kräfte aufzunehmen und zu tragen ohne dabei beschädigt zu werden. Auch muss die Flexibilität der einzelnen Segmente und Ausleger durch die Gelenke gewährleistet sein. Prinzipiell können in der vorliegenden Erfindung jede Art von Gelenken, beispielsweise Drehgelenke oder Kugelgelenke, verwendet werden, solange diese den genannten Anforderungen gerecht werden. Auch ist es im Rahmen der Erfindung vorstellbar, mehrere verschieden ausgestaltete Gelenke hinsichtlich Gelenkart und/oder des verwendeten Materials und/oder der Größe auf einem Ausleger anzuordnen. Dies kann in der Praxis relevant sein, da die Kräfte, welche auf die sich näher am Mittelteil angeordneten Gelenke einwirken, aufgrund der Hebelwirkung größer sein werden als die Kräfte, welche auf die Gelenke einwirken, die weiter entfernt vom Mittelteil auf dem Ausleger angeordnet sind.

Ebenso kann die Ausgestaltung der Spritzdüsen je nach Einsatzbereich der Spritzvorrichtung unterschiedlich vorgenommen werden. Die Ausgestaltung kann im Rahmen der vorliegenden Erfindung hinsichtlich der gewünschten Ausbringungsmenge pro Zeit der zu verteilenden Spritzflüssigkeit erfolgen. Das Erscheinungsbild des Spritzstrahls kann unterschiedliche Formen, wie beispielsweise fächerartige oder kegelartige Ausgestaltungen, aufweisen. Die Ausgestaltung der Spritzeinrichtung mit mehreren unterschiedlichen Düsen ist ebenfalls möglich. Auch kann die Anzahl der Spritzdüsen je nach Verwendungszweck variieren. Mit von der Erfindung umfasst sind auch Spritzgestänge mit in Fahrtrichtung verschwenkbaren Düsen, die am Spritzgestänge bspw. um eine quer zur Fahrtrichtung angeordnete Längsachse der Auslegerarme des Spritzgestänges verdrehbar sein können. Derartige verstellbare Düsen können die Abtrift des Spritzmittels bei schnellerer Fahrt und/oder bei variablen Windverhältnissen deutlich reduzieren.

Das Material des Auslegers sollte eine hohe Festigkeit bei weitgehend geringer Masse aufweisen. Aufgrund seiner Materialeigenschaften ist für die Ausgestaltung der Ausleger bspw. Stahlbau, insbesondere als Fachwerk bzw. Gitterstruktur, gut geeignet. Auch durch andere Materialien mit ähnlichen Eigenschaften kann eine leichte und hoch belastbare Ausgestaltung der Ausleger gewährleistet werden. So können sich zukünftig Verbundmaterialien aus Stahl und Kunststoff und/oder Faserverbundstrukturen für derartige Spritzgestänge eignen.

Vorzugsweise weist ein Ausleger zwei Seiten auf, welche sich auf der vom Mittelteil abgewandten Seite des Auslegers treffen. Zur Stabilisierung der beiden Seiten können zwischen diesen über die gesamte Länge des Auslegers verteilt Verbindungen angebracht werden. Die Verbindungen können aus demselben Material ausgebildet sein wie die beiden Seitenteile oder aus einem anderen Material, welches für diesen Verwendungszweck geeignet ist. Die Länge der Ausleger kann je nach Verwendungszweck variieren. Typischerweise können die Ausleger mit einer Länge von ca. 12 bis 18 Metern für jeden Ausleger ausgebildet sein, so dass sich unter zusätzlicher Berücksichtigung des Mittelteils mit ca. 2 bis 3 Metern Breite eine gesamte Arbeitsbreite des Spritzgestänges von bis zu 40 Metern oder mehr ergeben kann.

Im Rahmen der erfindungsgemäßen Spritzeinrichtung sind mindestens zwei Ausleger vorgesehen. Diese sind vorzugsweise symmetrisch zu einer vertikalen Achse, welche durch den Mittelteil verläuft, anzuordnen. Für bestimmte Einsatzzwecke, wie beispielsweise für die Verteilung von zwei unterschiedlichen Flüssigkeiten, kann es nötig sein, mehr als zwei Ausleger für die Spritzeinrichtung vorzusehen. In diesem Fall können jeweils zwei oder mehrere Ausleger parallel angeordnet werden.

Jeder der Ausleger ist erfindungsgemäß in mindestens zwei Segmente unterteilt. Die Segmente sind untereinander durch Gelenke verbunden, welche, wie zuvor erwähnt, anforderungsgerecht ausgestaltet werden müssen. Die Anzahl der Segmente kann beliebig groß gewählt werden, jedoch dürfen nicht weniger als zwei Segmente für jeden der Ausleger vorhanden sein, da sonst die gewünschte Flexibilität und die damit einhergehende Anpassung an die Bodenkonturen nicht gewährleistet werden kann. Durch die Gelenke wird ein Schwenken der Segmente um eine horizontal angeordnete Achse ermöglicht. Diese horizontale Achse verläuft vorzugsweise in Fahrtrichtung des Spritzgestänges.

Die aktive Steuerung der Stellbewegung der einzelnen Segmente erfolgt durch Stellglieder, vorzugsweise über hydraulische Stellvorrichtungen. Diese können durch jeweils einen Hydraulikzylinder und einen hydraulischen Motor ausgebildet sein. Ebenso wie bei den Gelenken können die über den Ausleger angeordneten Hydraulikzylinder hinsichtlich des Kolben- und Stangendurchmessers variieren. Auch der Hydraulikmotor kann je nach erwünschten Eigenschaften unterschiedlich ausgestaltet werden. Beispielsweise können im Rahmen der Erfindung für den Hydraulikmotor Radialkolbenmotoren, Axialkolbenmotoren oder Zahnradpumpen ihre Verwendung finden. Auch sind nichthydraulische Ausgestaltungen der Stellglieder vorstellbar, beispielsweise durch mechanische Mittel. Auch elektromotorisch betriebene Stelleinrichtungen sind denkbar. Allerdings sind auch andere Stelleinrichtungen denkbar, bspw. elektromotorisch betriebene Linearmotoren o. dgl.

Um zusätzlich zum Schwenkvorgang der einzelnen Segmente eine Höhenverstellbarkeit der Ausleger zu ermöglichen, ist zudem vorgesehen, den Mittelteil entlang einer vertikalen Achse bewegbar anzuordnen. Der Freiheitsgrad der Spritzvorrichtung kann zudem erhöht werden, wenn auch der Mittelteil über eine horizontale Achse schwenkbar angeordnet ist. Um diesen Anforderungen gerecht zu werden, kann der Mittelteil unterschiedlich ausgestaltet werden. Beispielsweise kann die Ausgestaltung durch parallel angeordnete Gestänge bzw. sog. Parallelogrammgestänge o. dgl. erfolgen.

Die Anpassung der Relativposition der einzelnen Segmente an die unterschiedlichen Bodenkonturen erfolgt erfindungsgemäß durch das in Anspruch 5 vorgeschlagene Verfahren. Hierbei werden Istwerte bezüglich der Relativposition der einzelnen Segmente erfasst. Die Istwerterfassung erfolgt mittels Sensoren, wobei diese an derjenigen Seite des Auslegers angeordnet werden können, welche der Bodenstruktur zugewandt ist. Als Sensoren werden Ultraschallsensoren verwendet. Darüber hinaus ist dem Fachmann bekannt, dass er zur Istwerterfassung in der vorliegenden Erfindung auch andere Typen von Sensoren, wie beispielsweise optische Sensoren, einsetzen kann.

Nach Erfassung des jeweiligen Istwertes wird dieser an eine Datenverarbeitungsvorrichtung übermittelt. Dies kann mittels einer Kabelverbindung aber auch kabellos erfolgen.

Die Kalibrierung der Datenverarbeitungsvorrichtung kann beispielsweise durch Winkellagegeber erfolgen, die einen Istwert bezüglich der Relativposition von benachbarten Segmenten vor oder zeitgleich mit der Inbetriebnahme des Spritzgestänges an die Datenverarbeitungsvorrichtung übermitteln. Die Übermittelung kann mittels einer Kabelverbindung oder kabellos erfolgen. Alternativ zu den Winkellagegebern ist auch eine zu diesem Zweck vorgesehene Ausgestaltung der Erfindung durch Linearmessysteme, angeordnet an den Stellgliedern, vorstellbar. Für Winkellagegeber können beispielsweise Inkrementalgeber, Potentiometergeber oder Resolver o. dgl. verwendet werden. Die Verwendung solcher Drehwertgeber ist besonders dann vorteilhaft, wenn die Ausleger jeder Seite jeweils nach einer besonderen Steuervorschrift verschwenkt werden, nach der beim Hochschwenken eines inneren Segments das daran schwenkbar befestigte äußere Segment um einen passenden Winkel gegensinnig nach unten verschwenkt wird, um damit den Regelungsaufwand zu reduzieren. Typischerweise auftretende Bodenunebenheiten, die zur Höhenjustierung des Spritzgestänges führen, sind lokal begrenzt und machen normalerweise keine gleich gerichtete Verschwenkung des gesamten Auslegerarmes einer Seite notwendig. Eine Verschwenkung des inneren Armes in eine Richtung wird deshalb sinnvollerweise mit einer gegensinnigen Verschwenkung des daran gelagerten äußeren Armsegments und/oder mit einer nochmals gegensinnigen weiteren Verschwenkung des daran gelagerten weiteren Armes kombiniert so dass deren Abstände weitgehend konstant gehalten und erst anschließend auf Basis einer Abstandsmessung der entsprechenden Distanzsensoren eine Feinregulierung der Segmente in ihrer Höhe erfolgen kann. Für eine exakte Steuerung der gegensinnigen Verschwenkbewegungen der Segmente eines Auslegers können die Signale der in den Gelenken angeordneten Drehwertgeber vorteilhaft genutzt werden.

Bei der Datenverarbeitungsvorrichtung kann es sich prinzipiell um jede elektronische Vorrichtung handeln, die in der Lage ist, einen Soll-Istwert-Vergleich durchzuführen und auf dessen Grundlage einen Stellwert auszugeben. Bewährt haben sich hierfür computergestützte Systeme.

Weicht der übermittelte Istwert vom Sollwert ab, so wird von der Datenverarbeitungsvorrichtung ein Signal an die Stellglieder ausgegeben, welche eine Veränderung der Relativposition der einzelnen Segmente hinsichtlich der ausgegebenen Signale durch die Datenverarbeitungsvorrichtung vornehmen. Der Sollwert kann vom Benutzer vorgegeben werden oder vordefiniert auf einem Datenträger gespeichert sein. Vorzugsweise ist der Sollwert für alle Segmente eines Auslegers gleich, so dass ebenso der Relativabstand der einzelnen Segmente bezüglich des Untergrundes stetig weitgehend konstant gehalten wird.

Wird ein Istwert erfasst, so erfolgt bei einer Abweichung vom Sollwert nicht zwingend eine direkte Stellbewegung des Segmentes, an dem der Sensor angeordnet ist; vielmehr werden in der Datenverarbeitungsvorrichtung alle eingehenden Istwerte und zudem Istwerte bezüglich der aktuellen Position von Segmenten miteinander verrechnet und dementsprechende Signale an alle Stellglieder ausgegeben, so dass eine Stellbewegung eines Segmentes immer in Relation zu den übrigen Segmenten erfolgt. Wie zuvor erwähnt, kann diese kombinierte Stellbewegung auf Basis der erfassten Werte der Abstandssensoren und/oder der zusätzlichen Auswertung der von den Drehwertgebern gelieferten Signale gesteuert werden.

Wenn im vorliegenden Zusammenhang von Auslegern des Spritzgestänges die Rede ist, so sind damit alle an sich bekannten Arten von Tragarmen o. dgl. gemeint, wie sie von herkömmlichen Spritzgestängen bereits bekannt sind. Diese Tragarme bzw. Ausleger unterscheiden sich von den bekannten Spritzgestängen allerdings durch ihre gelenkige Unterteilung sowie die Art ihrer Verstellbarkeit.

Im Folgenden sollen Ausführungsbeispiele die Erfindung und ihre Vorteile anhand der beigefügten Figuren näher erläutern. Weitere Merkmale, Ziele und Vorteile der vorliegenden Erfindung gehen aus der nun folgenden detaillierten Beschreibung einer Ausführungsform der Erfindung hervor, die als nicht einschränkendes Beispiel dient und auf die beigefügten Zeichnungen Bezug nimmt.
Figur 1 zeigt eine schematische Ansicht des beanspruchten Spritzgestänges in Aktion bei ebenen Bodenkonturen.
Figur 2 zeigt eine schematische Ansicht des beanspruchten Spritzgestänges vor Ausführung einer Stellbewegung bei unregelmäßiger Bodenoberfläche.
Figur 3 zeigt eine schematische Ansicht des beanspruchten Spritzgestänges nach Ausführung einer Stellbewegung bei unregelmäßiger Bodenoberfläche.
Figur 4 zeigt eine schematische Ansicht des beanspruchten Spritzgestänges nach Ausführung einer Stellbewegung bei unregelmäßigen Bodenstrukturen mit mehreren Gefällen und Steigungen.
Figur 5 zeigt die Möglichkeit zur Veränderung der Stellposition des Mittelteils.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

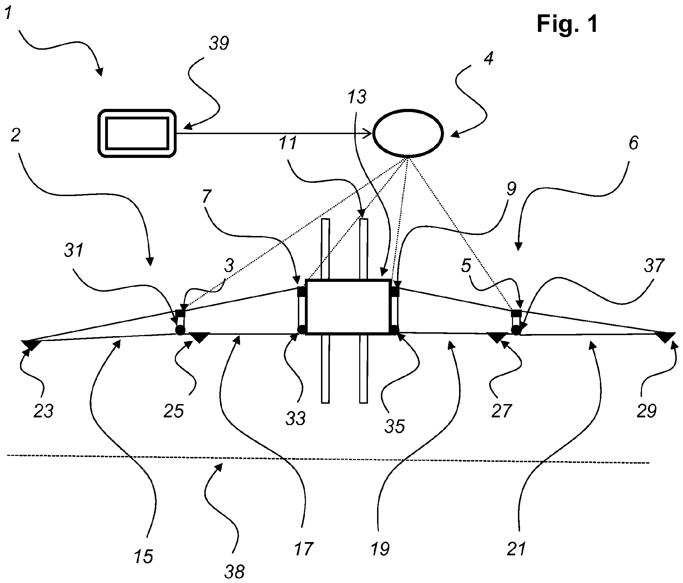

Die nachfolgend näher erläuterten Figuren 1 bis 5 verdeutlichen eine bevorzugte Ausführungsform eines Spritzgestänges, wie es typischerweise an Arbeitsmaschinen, Zugmaschinen oder anderen Trägerfahrzeugen angehängt oder aufgesattelt sein kann. Solche Trägerfahrzeuge können bspw. Spezialfahrzeuge sein, die einen Tank für flüssiges Spritzmittel sowie das erfinduingsgemäße Spritzgestänge tragen können.

**Figur 1** zeigt ein Spritzgestänge 1 der beanspruchten Art. Das Spritzgestänge weist zwei äußere Segmente, 15 und 21, und zwei innere Segmente, 17 und 19, auf. Die Segmente 15 und 17 und die Segmente 19 und 21 bilden jeweils einen Ausleger 2 und 6 des Spritzgestänges 1. Das Segment 15 ist mit dem Segment 17 durch mindestens ein Gelenk 31 verbunden, das Segment 19 mit dem Segment 21 durch mindestens ein Gelenk 37. Zudem ist ein Mittelteil 13 vorhanden, an dem die Segmente 17 und 19 mittels mindestens zwei Gelenken 33 und 35 verbunden sind. Die Gelenke 31, 33, 35 und 37 sind erfindungsgemäß derart ausgebildet, dass sie einen Schwenkvorgang der einzelnen Segmente oder der gesamten Flanke über eine horizontale Achse ermöglichen. Vorzugsweise verläuft diese horizontale Achse annähernd in Fahrtrichtung und durch das jeweilige Gelenk um das geschwenkt werden soll. Der Mittelteil 13 ist in einer bevorzugten Ausführungsform beweglich an einer Verstellvorrichtung 11 angeordnet. Dargestellt ist eine Ausbildungsform der Verstellvorrichtung 11 durch Stellschienen und eine blockförmige Ausbildungsform des Mittelteils 13. Vorstellbar sind auch andere Ausbildungsformen, wie beispielsweise die Ausbildungsform des Mittelteils 13 durch parallele Gestänge bzw. durch ein sog. Parallelogrammgestänge. Entscheidend ist die Möglichkeit, zumindest die Höhe des Mittelteiles 13, ggf. zusätzlich seinen Winkel bezüglich der Zugmaschine verstellen zu können.

Soll ein Schwenkvorgang der einzelnen Segmente und/oder der gesamten Flanke ermöglicht werden, so wird der Schwenkvorgang aktiv gesteuert. Die an den einzelnen Segmenten angebrachten Sensoren 23, 25, 27 und 29 stehen in indirektem Kontakt mit der Bodenoberfläche 38. Dieser indirekte Kontakt kann beispielsweise durch akustische oder optische Sensoren hergestellt werden. Die Sensoren 23, 25, 27 und 29 erfassen bei Betrieb des Spritzgestänges 1 ihren relativen Abstand zur Bodenoberfläche 38 und übertragen den erfassten Istwert an eine Datenverarbeitungsvorrichtung 39 über eine Kabelverbindung oder über Funk. Zudem kann eine Kalibrierung der Datenverarbeitungsvorrichtung 39, vor oder gleichzeitig mit Inbetriebnahme der Spritzeinrichtung 1, durch Winkellagegeber erfolgen, die analog zu den Sensoren an den Segmenten angeordnet sein können. Die Winkellagegeber können Istwerte bezüglich des Istwinkels der einzelnen benachbarten Segmente 15, 17, 19 und 21 untereinander an die Datenverarbeitungsvorrichtung 39 übermitteln. Die Übermittlung der Istwerte kann durch eine Kabelverbindung oder kabellos erfolgen.

Die Datenverarbeitungsvorrichtung 39 ist vorzugsweise abgesondert von den übrigen Komponenten des Spritzgestänges 1 angeordnet, beispielsweise in der Fahrerkabine einer Zugmaschine des Spritzgestänges 1, kann aber auch an dem Spritzgestänge 1 selbst angeordnet sein. Sie umfasst ein rechnergestütztes System, welches in der Lage ist, die von den Sensoren 23, 25, 27 und 29 erfassten Istwerte mit bereits hinterlegten oder durch den Benutzer vorgegebenen Sollwerten zu vergleichen. Nach der Verrechnung durch entsprechende Algorithmen wird aufgrund der hieraus gewonnenen Daten ein Stellsignal an die Stellglieder 3,5,7 und 9 in der dargestellten Ausführungsform über einen hydraulischen Motor 4 ausgegeben. Der hydraulische Motor ist vorzugsweise an dem Spritzgestänge 1 angeordnet, kann aber auch abgesondert von diesem angeordnet sein. Die Stellglieder 3,5,7 und 9 sind im Ausführungsbeispiel Hydraulikzylinder. Diese sind in der Lage, durch eine Stellbewegung die einzelnen Segmente 15, 17, 19 und 21 in die gewünschte Position zu bringen. Die gewünschte Position kann für alle Segmente 15, 17, 19 und 21 derselbe vordefinierte Abstand zur Bodenoberfläche 38 sein. Die Übertragung der Signale an die Stellglieder 3, 5, 7 und 9 kann durch eine Kabelverbindung oder durch Funk erfolgen. Die Stellglieder 3, 5, 7 und 9 müssen dahingehend ausgebildet sein, die nötige Energie für den Schwenkvorgang der einzelnen Segmente 15, 17, 19 und 21 und/oder der Ausleger 2 und 6 aufzubringen. In Figur 1 ist die Bodenoberfläche 38 weitgehend eben ausgebildet. Da der Abstand der einzelnen Segmente 15, 17, 19 und 21 und Sensoren 23, 25, 27 und 29 im Ausführungsbeispiel der Figur 1 zur Oberfläche konstant gehalten werden soll, gibt die Datenverarbeitungsvorrichtung 39 keine Signale zur Veränderung der Stellposition an den hydraulischen Motor 4 und die Stellglieder 3,5, 7 und 9 aus, um einen Schwenkvorgang der Segmente 15, 17, 19 und 21 durchzuführen.

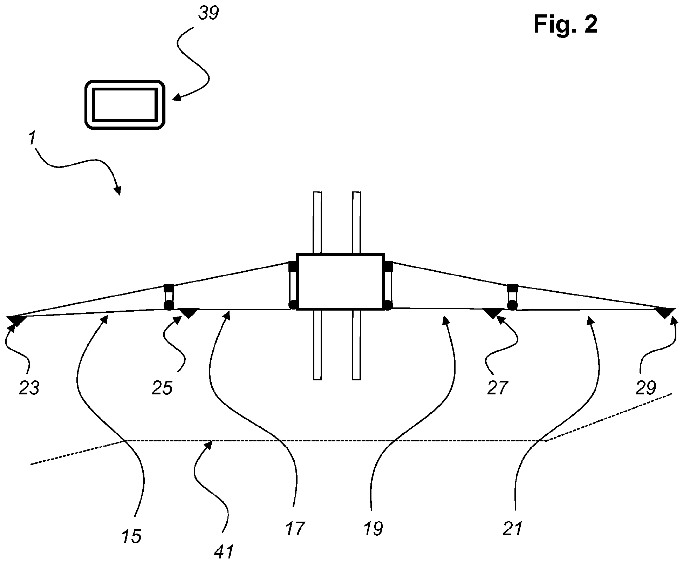

**Figur 2** zeigt eine schematische Ansicht des beanspruchten Spritzgestänges 1 vor Ausführung einer Stellbewegung bei unregelmäßiger Bodenoberfläche 41. Die Sensoren 23, 25, 27 und 29 erfassen die aktuellen Istwerte bezüglich ihres Abstandes zur Bodenoberfläche 41 und geben diese direkt an die Datenverarbeitungsvorrichtung 39 weiter. Während die Sensoren 25 und 27 aufgrund der in ihrem Bereich ebenen Bodenoberfläche annähernd identische Istwerte an die Datenverarbeitungsvorrichtung 39 übermitteln, fallen die Istwerte der Sensoren 23 und 29 bezüglich ihrer Relativposition unterschiedlich aus. Trotz der ebenen Bodenoberfläche 41 im Bereich der Sensoren 25 und 27 werden die Istwerte der Sensoren 25 und 27 ebenfalls bei der Datenverarbeitung miteinbezogen. Es erfolgt also keine Veränderung der Stellposition eines Segmentes 15, 17, 19 oder 21 bezüglich der Istwerte des sich an diesem Segment befindlichen Sensors 23, 25, 27 und 29, sondern es werden vielmehr alle übermittelten Istwerte in die Datenverarbeitung miteinbezogen. Auch berücksichtigt die Datenverarbeitung nicht nur die durch die Sensoren 23, 25, 27 und 29 übermittelten Istwerte, sondern auch Istwerte hinsichtlich deren aktueller Relativposition. In der Datenverarbeitungsvorrichtung erfolgt darauf eine Verrechnung der Werte, worauf bei einer Abweichung des errechneten Wertes vom Sollwert eine Veränderung der Stellposition der einzelnen Segmente 15 und/oder 17 und/oder 19 und/oder 21 unter Berücksichtigung sämtlicher Istwerte erfolgt. Die Veränderung der Stellposition eines Segmentes 15, 17, 19 oder 21 erfolgt daher nicht absolut auf den Wert des jeweiligen dem Segment zugehörigen Sensors bezogen, sondern immer in Relation zu der Stellung der anderen Segmente und ihrer zugehörigen Sensoren. Soll eine Veränderung der Stellposition eines ersten Segmentes (15, 17, 19 oder 21) bewirkt werden, so kann die Veränderung der Stellposition zeitgleich mit der gegensinnigen Veränderung der Stellposition eines zweiten Segmentes, welches auf dem gleichen Ausleger angeordnet ist, erfolgen.

Die Segmente erfahren dabei jeweils gegensinnige Bewegungen, wodurch der Regelungsaufwand für das Spritzgestänge deutlich reduziert werden kann, da die Störgrößen bei Segmenten, deren Abstand zum Boden nicht verstellt werden muss, durch die gleichzeitige Verstellung anderer Segmente, an denen die nicht zu verstellenden aber zwangsläufig mitverstellten Segmente aufgehängt sind, reduziert werden.

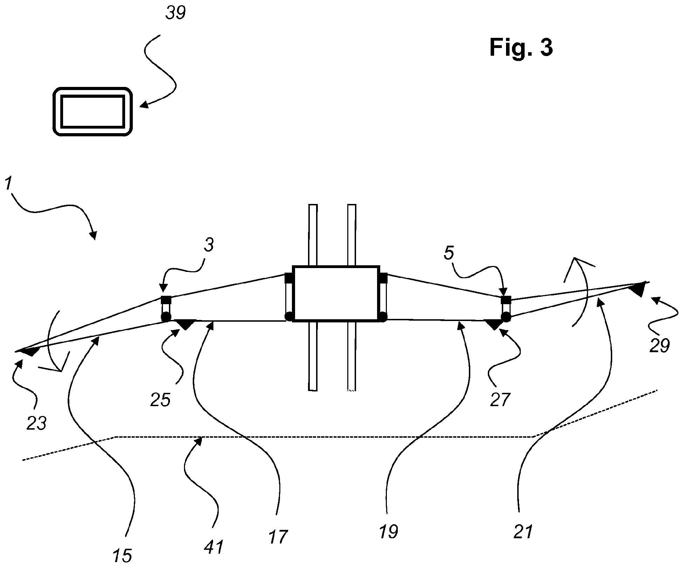

**Figur 3** zeigt eine schematische Ansicht des beanspruchten Spritzgestänges 1, nach Ausführung einer Stellbewegung zeitlich nach der in Figur 2 beschriebenen Verrechnung von Istwerten bei unregelmäßiger Bodenoberfläche 41. Aufgrund der kurzen Übertragungszeiten zwischen Signalerfassung durch die Sensoren 23, 25, 27 und 29 und Weitergabe der Signale an die Stellglieder 3, 5, 7 und 9 mit anschließender Veränderung der Relativposition der Segmente 15 und/oder 17 und/oder 19 und/oder 21 ist eine Anpassung der einzelnen Segmente 15, 17, 19 und 21 an die unregelmäßige Bodenoberfläche 41 annähernd in Echtzeit möglich. Wegen der Rechenoperation in der Datenverarbeitungsvorrichtung 39 wurden Signale zur Veränderung der Stellposition an die einzelnen Stellglieder 3 und 5 ausgegeben, worauf ein Schwenkvorgang der Segmente 15 und 21 um eine horizontale Achse erfolgte. Dargestellt ist die erfolgte Schwenkrichtung in Figur 2 durch die abgebildeten Pfeile. Auch während dem Schwenkvorgang können stetig Istwerte von den Sensoren 23, 25, 27 und 29 an die Datenverarbeitungsvorrichtung 39 übermittelt werden, so dass auch währenddessen auf unterschiedliche Bodenkonturen reagiert werden kann.

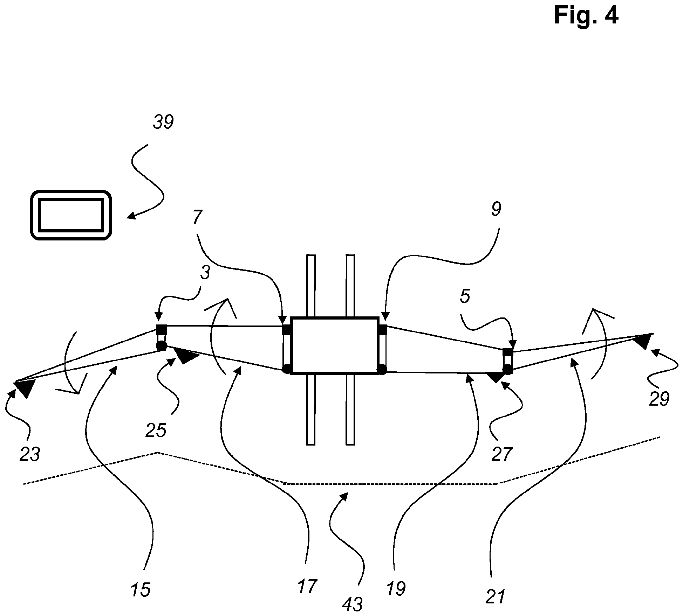

**Figur 4** zeigt eine schematische Ansicht der beanspruchten Spritzanlage nach Ausführung einer Stellbewegung bei unregelmäßiger Bodenoberfläche mit mehreren Gefällen und Steigungen 43. Wie bereits in Figur 2 und in Figur 3 geschildert, geht der Ausführung einer Stellbewegung stets eine Erfassung der aktuellen Istwerte durch die Sensoren 23, 25, 27 und 29 zeitlich voraus. Aufgrund der unterschiedlichen Bodenstruktur 43 wurden vor der in Figur 4 dargestellten Stellbewegung von den Sensoren 23, 25, 27 und 29 unterschiedliche Istwerte bezüglich ihres aktuellen Abstandes zur Bodenoberfläche 43 an die Datenverarbeitungsvorrichtung 39 übermittelt. Bei Eingang der durch die Sensoren 23, 25, 27 und 29 erfassten Istwerte werden diese zusammen mit den Istwerten hinsichtlich der aktuellen Stellposition der einzelnen Segmente 15, 17, 19 und 21 in der Datenverarbeitungsvorrichtung 39 verrechnet und Signale an die einzelnen Stellglieder 15 und/oder 17 und/oder 19 und/oder 21 ausgegeben, sollte die Rechenoperation in der Datenverarbeitungsvorrichtung 39 einen von den vordefinierten Sollwerten unterschiedlichen Wert ergeben. Besonders vorteilhaft ist dieses Verfahren, wenn mehrere Stellglieder 3, 5, 7 und 9 bei einer Veränderung der Stellposition zum gleichen Zeitpunkt angesteuert werden. Dadurch erfolgt der Schwenkvorgang von einzelnen Segmenten 15, 17, 19 und 21 ebenfalls zum gleichen Zeitpunkt. Soll sich das Schwenken eines der beiden äußeren Segmente 15 und/oder 21 zeitgleich mit dem an diesem angeordneten inneren Segment 17 und/oder 19 ereignen, so berücksichtigt die Datenverarbeitungsvorrichtung 39 vor der Ausgabe eines Signales an die Stellglieder 3,5,7 und 9 diesen Umstand. Die Stellbewegung der äußeren Segmente 15 und/oder 21 erfolgt deshalb immer in Relation zu den an diesem angeordneten jeweiligen inneren Segment 17 und/oder 19. Die Schwenkrichtung wird durch die in Figur 4 dargestellten Pfeile angezeigt. Vorliegend gab die Datenverarbeitungseinrichtung ein Signal für einen zeitgleichen Schwenkvorgang des inneren Segmentes 17 unter Berücksichtigung des Schwenkvorganges des äußeren Segments 15 aus. Die Veränderung der Stellposition des äußeren Segmentes 21 kann in Figur 4 ohne Berücksichtigung eines Schwenkvorganges des inneren Segmentes 19 durchgeführt werden, da sich dieses zum Zeitpunkt der Veränderung der Stellposition des Segmentes 19 in Ruhe befindet.

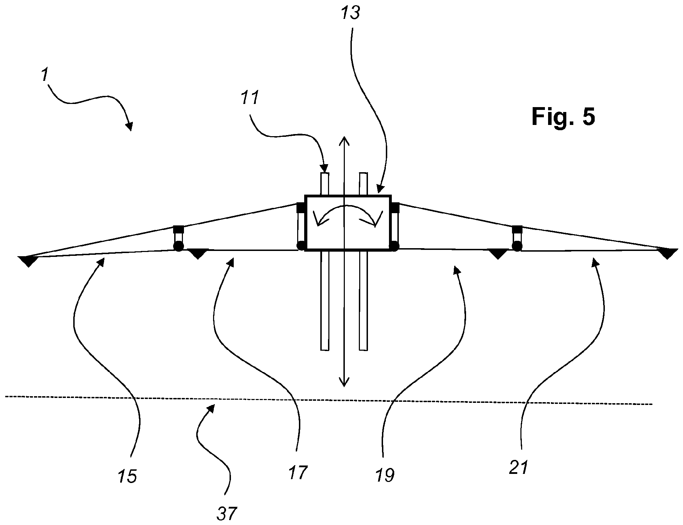

**Figur 5** zeigt die Möglichkeit zur Veränderung der Stellposition des Mittelteils 13 eines beanspruchten Spritzgestänges 1. Der Mittelteil 13 ist hierbei an einer Verstellvorrichtung, vorliegend ausgebildet durch Verstellschienen, in vertikaler Richtung bewegbar, angeordnet. Zudem kann der Mittelteil 13 um eine horizontale Achse schwenkbar angeordnet werden. Ist dies wie im gezeigten Ausführungsbeispiel der Fall und erfolgt ein Schwenkvorgang des Mittelteils 13 um eine horizontale Achse zeitgleich mit einem Schwenkvorgang der Segmente 15 und/oder 17 und/oder 19 und/oder 21, so kann der Schwenkvorgang dieser Segmente unter Berücksichtigung des Schwenkvorganges des Mittelteils gestaltet werden. Auch besteht die Möglichkeit, die Stellposition in horizontaler Richtung manuell durch den Benutzer regulieren zu lassen. Die Bewegungsmöglichkeiten des Mittelteils werden durch die Pfeile in Figur 5 angedeutet. Der Mittelteil 13 kann wie vorliegend beispielsweise blockförmig ausgebildet sein. Vorstellbar sind auch andere Ausbildungsformen, wie beispielsweise die Ausbildungsform des Mittelteils 13 durch parallele Gestänge. Ist dies der Fall, so kann für das Gestänge jegliches Material verwendet werden, welches den durch die Ausleger (2, 6) auftretenden Belastungen gerecht wird.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 1: Spritzgestänge
- 2: Ausleger
- 3: Stellglied
- 4: Hydraulischer Motor
- 5: Stellglied
- 6: Ausleger
- 7: Stellglied
- 9: Stellglied
- 11: Verstellvorrichtung
- 13: Mittelteil
- 15: Äußeres Segment
- 17: Inneres Segment
- 19: Inneres Segment
- 21: Äußeres Segment
- 23: Sensor
- 25: Sensor
- 27: Sensor
- 29: Sensor
- 31: Gelenk
- 33: Gelenk
- 35: Gelenk
- 37: Gelenk
- 38: Bodenoberfläche
- 39: Datenverarbeitungsvorrichtung
- 41: Unregelmäßige Bodenoberfläche
- 43: Unregelmäßige Bodenoberfläche mit mehreren Gefällen und Steigungen

## Patentansprüche

1. Spritzgestänge (1) mit mindestens zwei über Gelenke an einem Mittelteil angeordneten Auslegern (2, 6) und an den Auslegern angeordneten Spritzdüsen zum Ausbringen von Flüssigkeiten, wobei jeder Ausleger (2, 6) in mindestens zwei Segmente (15, 17 und 19, 21) unterteilt ist, die über eine horizontale Achse schwenkbar angeordnet sind, wobei die Segmente (15, 17 und 19, 21) untereinander mittels Gelenken (31, 37) verbunden sind und eine Stellbewegung der einzelnen Segmente (15, 17, 19 und 21) zueinander aktiv steuerbar ist, wobei
- jedem der Gelenke zwischen den Segmenten jeweils eine steuerbare Stellvorrichtung zugeordnet ist, und dass den Segmenten (15, 17, 19, 21) Sensoren (23, 25, 27, 29) zur Erfassung und Weiterleitung eines Istwertes bezüglich der Relativposition der Segmente (15, 17, 19, 21) zugeordnet sind,
- wobei die Sensoren (23, 25, 27, 29) jeweils an Seiten der Ausleger (2, 6) angeordnet sind, die einer Bodenkontur zugewandt ist, **dadurch gekennzeichnet**, das die Sensoren (23, 25, 27, 29) durch optische Sensoren oder durch Ultraschallsensoren gebildet sind,
- und dass den Segmenten Winkellagegeber zur Erfassung und Weiterleitung eines Istwertes bezüglich der Relativposition jeweils benachbarter Segmente (15, 17, 19, 21) zugeordnet sind,
- und dass eine Datenverarbeitungsvorrichtung (39) vorhanden und mit den Sensoren (23, 25, 27, 29) und mit den Winkellagegebern gekoppelt ist, die Signale an Stellglieder ausgeben kann, so dass eine Stellbewegung eines Segmentes (15, 17, 19, 21) immer in Relation zu den übrigen Segmenten (15, 17, 19, 21) erfolgt.

2. Spritzgestänge (1) nach Anspruch 1, **dadurch gekennzeichnet, dass** der Mittelteil (13) entlang einer vertikalen Achse bewegbar angeordnet ist.

3. Spritzgestänge (1) nach einem oder mehreren der vorhergehenden Ansprüche, **dadurch gekennzeichnet, dass** der Mittelteil (13) über eine annähernd horizontale Achse schwenkbar angeordnet ist.

4. Spritzgestänge nach einem oder mehreren der vorhergehenden Ansprüche, **dadurch gekennzeichnet, dass** die Bewegungen der einzelnen Segmente (15, 17, 19 und 21) mit Hilfe von hydraulischen Stellzylindern (3, 5, 7 und 9) erfolgen.

5. Verfahren zur Veränderung der Relativposition von Segmenten (15, 17, 19, 21) eines an einem Mittelteil (13) über Gelenke (33, 35) angeordneten Auslegers (2, 6) eines Spritzgestänges (1), wobei ein Ausleger (2, 6) in mindestens zwei Segmente (15, 17 und 19, 21) unterteilt ist, welche über Gelenke (31, 37) untereinander verbunden und über eine horizontale Achse schwenkbar angeordnet sind, wobei
- Istwerte bezüglich der Relativposition von Segmenten (15, 17, 19, 21) erfasst und an eine Datenverarbeitungsvorrichtung (39) übermittelt und dort mit einem vordefinierten Sollwert verglichen werden,
- Istwerte bezüglich der Relativposition jeweils benachbarter Segmente (15, 17, 19, 21) erfasst und an die Datenverarbeitungsvorrichtung (39) übermittelt werden,
- bei Abweichung eines Istwertes vom Sollwert ein Signal an Stellglieder (3, 5, 7, 9) ausgegeben wird und
- die Stellglieder (3, 5, 7, 9) eine Veränderung der Relativposition von Segmenten (15, 17, 19, 21) bewirken,
wobei die Veränderung der Relativposition eines ersten Segmentes (15, 17, 19 oder 21) zeitgleich mit der gegensinnigen Veränderung der Relativposition mindestens eines zweiten Segmentes (15, 17, 19 oder 21), welches auf dem gleichen Ausleger (2 oder 6) angeordnet ist, erfolgt, wodurch die Stellbewegung der äußeren Segmente (15 und/oder 21) in Relation zu den an diesem angeordneten jeweiligen inneren Segment (17 und/oder 19) erfolgt.

6. Verfahren nach Anspruch 5, **dadurch gekennzeichnet, dass** der Istwert bezüglich der Relativposition eines Segmentes (15, 17, 19, 21) mittels Sensoren (23, 25, 27, 29) erfasst wird.

7. Verfahren nach Anspruch 5 oder 6, **dadurch gekennzeichnet, dass** den Segmenten (15, 17, 19, 21) Winkellagegeber zugeordnet sind, die einen Istwert bezüglich der Relativposition benachbarter Segmente an eine Datenverarbeitungsvorrichtung (39) weiterleiten.

8. Verfahren nach einem oder mehreren der Ansprüche 5 bis 7, **dadurch gekennzeichnet, dass** die Stellglieder (3, 5, 7, 9) eine Veränderung der Relativposition von Segmenten (15, 17, 19, 21) eines Auslegers (2, 6) hydraulisch bewirken.

9. Verfahren nach einem oder mehreren der Ansprüche 5 bis 8, **dadurch gekennzeichnet, dass** der Sollwert für alle Segmente (15, 17, 19, 21) eines Auslegers (2, 6) gleich ist.

## Claims

1. A spray boom (1) with at least two cantilevers (2, 6) arranged on a middle part by way of joints and with spray nozzles for spreading liquids arranged at the cantilevers, wherein each cantilever (2, 6) is divided into at least two segments (15, 17 and 19, 21), which are pivotably arranged by way of a horizontal axis, wherein the segments (15, 17 and 19, 21) are interconnected to each other by means of joints (31, 37) and a setting movement of the individual segments (15, 17, 19 and 21) in relation to each other is actively controllable,
wherein
- each of the joints is associated with in each case one controllable setting device between the segments, and wherein the segments (15, 17, 19, 21) are associated with sensors (23, 25, 27, 29) for detecting and transmitting an actual value with reference to the relative position of the segments (15, 17, 19, 21),
- wherein the sensors (23, 25, 27, 29) are in each case arranged at the sides of the cantilevers (2, 6) that face toward a ground contour,
**characterised in that**
- the sensors (23, 25, 27, 29) are formed by optical sensors or by ultrasonic sensors,
- and **in that** the segments are associated with rotary angle encoders for detecting and transmitting an actual value with reference to the relative position of in each case adjacent segments (15, 17, 19, 21),
- and **in that** a data processing device (39) is present and coupled with the sensors (23, 25, 27, 29) and with the rotary angle encoders, which data processing device (39) can output signals to setting elements such that a setting movement of a segment (15, 17, 19, 21) is always carried out in relation to the other segments (15, 17, 19, 21).

2. The spray boom (1) as recited in claim 1, **characterised in that** the middle part (13) is arranged to be movable along a vertical axis.

3. The spray boom (1) as recited in one or more of the previous claims, **characterised in that** the middle part (13) is arranged to be pivotable about an approximately horizontal axis.

4. The spray boom as recited in one or more of the previous claims, **characterised in that** the motions of the individual segments (15, 17, 19 and 21) are carried out by means of hydraulic setting cylinders (3, 5, 7 and 9).

5. A method for changing the relative position of segments (15, 17, 19, 21) of a cantilever (2, 6) of a spray boom (1), which cantilever (2, 6) is arranged at a middle part (13) by way of joints (33, 35), wherein a cantilever (2, 6) is divided into at least two segments (15, 17 and 19, 21), which are interconnected to each other by way of joints (31, 37) and pivotably arranged by way of a horizontal axis, wherein
- actual values are detected with reference to the relative position of segments (15, 17, 19, 21) and are transmitted to a data processing device (39) and compared with a predefined desired value there,
- actual values are detected with reference to the relative position of in each case adjacent segments (15, 17, 19, 21) and are transmitted to a data processing device (39),
- a signal is output to the setting elements (3, 5, 7, 9) in the instance of an actual value deviating from the desired value and
- the setting elements (3, 5, 7, 9) effect a changing of the relative position of segments (15, 17, 19, 21),
wherein the changing of the relative position of a first segment (15, 17, 19 or 21) is carried out simultaneously with the counter-sense changing of the relative position of at least one second segment (15, 17, 19 or 21), which is arranged on the same cantilever (2 or 6), whereby the setting movement of the outer segments (15 and/or 21) is carried out in relation to the respective inner segment (17 and/or 19) arranged thereat.

6. The method as recited in claim 5, **characterised in that** the actual value with reference to the relative position of a segment (15, 17, 19, 21) is detected by means of sensors (23, 25, 27, 29).

7. The method as recited in claim 5 or 6, **characterised in that** the segments (15, 17, 19, 21) are associated with rotary angle encoders, which transmit an actual value with reference to the relative position of adjacent segments to a data processing device (39).

8. The method as recited in one or more of the claims 5 to 7, **characterised in that** the setting elements (3, 5, 7, 9) hydraulically effect a changing of the relative position of segments (15, 17, 19, 21) of a cantilever (2, 6).

9. The method as recited in one or more of the claims 5 to 8, **characterised in that** the desired value is the same for all segments (15, 17, 19, 21) of a cantilever (2, 6).

## Revendications

1. Rampe de pulvérisation (1) comprenant au moins deux flèches (2, 6) disposées sur une partie centrale par des articulations ainsi que des buses de pulvérisation disposées sur les flèches et destinées à distribuer des liquides, dans lequel chaque flèche (2, 6) est divisée en au moins deux segments (15, 17 et 19, 21) qui sont disposés à pivotement par un axe horizontal, dans lequel les segments (15, 17 et 19, 21) sont reliés entre eux au moyen d'articulations (31, 37) et un mouvement de réglage des segments (15, 17, 19 et 21) individuels les uns par rapport aux autres est commandable de manière active, dans lequel
- à chacune des articulations entre les segments est associé respectivement un dispositif de réglage commandable, et dans lequel des capteurs (23, 25, 27, 29) destinés à détecter et à transmettre une valeur réelle relative à la position relative des segments (15, 17, 19, 21) sont associés aux segments (15, 17, 19, 21),
- dans lequel les capteurs (23, 25, 27, 29) sont disposés chacun sur des faces des flèches (2, 6) qui montrent vers un contour de sol,
**caractérisée par le fait que**
- les capteurs (23, 25, 27, 29) sont constitués par des capteurs optiques ou par des capteurs à ultrasons,
- et que des détecteurs de position angulaire destinés à détecter et à transmettre une valeur réelle relative à la position relative de segments (15, 17, 19, 21) respectivement voisins sont associés aux segments,
- et qu'un dispositif de traitement de données (39) est présent et est couplé aux capteurs (23, 25, 27, 29) et aux détecteurs de position angulaire, qui est apte à émettre des signaux à des actionneurs de sorte qu'un mouvement de réglage d'un segment (15, 17, 19, 21) se fait toujours en relation avec les segments (15, 17, 19, 21) restants.

2. Rampe de pulvérisation (1) selon la revendication 1, **caractérisée par le fait que** la partie centrale (13) est disposée de manière à être déplaçable le long d'un axe vertical.

3. Rampe de pulvérisation (1) selon l'une ou plusieurs des revendications précédentes, **caractérisée par le fait que** la partie centrale (13) est disposée à pivotement par un axe approximativement horizontal.

4. Rampe de pulvérisation selon l'une ou plusieurs des revendications précédentes, **caractérisée par le fait que** les mouvements des segments (15, 17, 19 et 21) individuels se font à l'aide de vérins de réglage hydrauliques (3, 5, 7 et 9).

5. Procédé de modification de la position relative de segments (15, 17, 19, 21) d'une flèche (2, 6) d'une rampe de pulvérisation (1), qui est disposée sur une partie centrale (13) par des articulations (33, 35), dans lequel une flèche (2, 6) est divisée en au moins deux segments (15, 17 et 19, 21) qui sont reliés entre eux par l'intermédiaire d'articulations (31, 37) et sont disposés à pivotement par un axe horizontal, dans lequel
- des valeurs réelles relatives à la position relative de segments (15, 17, 19, 21) sont détectées et sont transmises à un dispositif de traitement de données (39) et y sont comparées à une valeur de seuil prédéfinie,
- des valeurs réelles relatives à la position relative de segments (15, 17, 19, 21) respectivement voisins sont détectées et sont transmises au dispositif de traitement de données (39),
- lorsqu'une valeur réelle diffère de la valeur de seuil, un signal est émis à des actionneurs (3, 5, 7, 9) et
- lesdits actionneurs (3, 5, 7, 9) provoquent une modification de la position relative de segments (15, 17, 19, 21),
dans lequel la modification de la position relative d'un premier segment (15, 17, 19 ou 21) se fait en même temps que la modification en sens opposé de la position relative d'au moins un deuxième segment (15, 17, 19 ou 21) qui est disposé sur la même flèche (2 ou 6), le mouvement de réglage des segments extérieurs (15 et/ou 21) se faisant ainsi en relation avec le segment intérieur respectif (17 et/ou 19) disposé sur ceux-ci.

6. Procédé selon la revendication 5, **caractérisé par le fait que** la valeur réelle relative à la position relative d'un segment (15, 17, 19, 21) est détectée au moyen de capteurs (23, 25, 27, 29).

7. Procédé selon la revendication 5 ou 6, **caractérisé par le fait que** des détecteurs de position angulaire qui transmettent à un dispositif de traitement de données (39) une valeur réelle relative à la position relative de segments voisins sont associés aux segments (15, 17, 19, 21).

8. Procédé selon l'une ou plusieurs des revendications 5 à 7, **caractérisé par le fait que** les actionneurs (3, 5, 7, 9) provoquent de façon hydraulique une modification de la position relative de segments (15, 17, 19, 21) d'une flèche (2, 6).

9. Procédé selon l'une ou plusieurs des revendications 5 à 8, **caractérisé par le fait que** la valeur de consigne est la même pour l'ensemble des segments (15, 17, 19, 21) d'une flèche (2, 6).
